# FASCICULE DE BREVET EUROPEEN

(11) **EP 3 567 399 B1**
(45) Date de publication et mention de la délivrance du brevet: **26.01.2022**
(21) Numéro de dépôt: 19171633.1
(22) Date de dépôt: 29.04.2019
(51) Int. Cl.: G01S 13/72, G01S 7/41

(54) **PROCEDE DE PISTAGE DE CIBLES, NOTAMMENT MARITIMES, ET RADAR METTANT EN OEUVRE UN TEL PROCEDE**
ORTUNGSVERFAHREN VON ZIELEN, INSBESONDERE MARITIMEN, UND RADAR ZUR UMSETZUNG DIESES VERFAHRENS
METHOD FOR TRACKING TARGETS, PARTICULARLY AT SEA, AND RADAR IMPLEMENTING SUCH A METHOD

(30) Priorité: 09.05.2018 FR 1800437
(43) Date de publication de la demande: 13.11.2019
(73) Titulaire: Thales, 92400 Courbevoie (FR)
(72) Inventeur: MAGNANT, Clément, 33400 Talence (FR); CORRETJA, Vincent, 33600 Pessac (FR); PETITJEAN, Julien, 33600 Pessac (FR); KEMKEMIAN, Stéphane, 75014 Paris (FR)
(74) Mandataire: Marks & Clerk France

(56) Documents cités:
- EP-A1- 3 236 281
- EP-A1- 3 239 656
- EP-A1- 3 246 726
- MAGNANT CLEMENT ET AL: "Joint tracking and classification for extended targets in maritime surveillance", 2018 IEEE RADAR CONFERENCE (RADARCONF18), IEEE, 23 avril 2018 (2018-04-23), pages 1117-1122, XP033357042, DOI: 10.1109/RADAR.2018.8378718

## Description

La présente invention concerne un procédé de cibles, notamment de cibles maritimes. L'invention concerne également un radar mettant en œuvre un tel procédé.

Le domaine d'application de l'invention est celui des radars aéroportés de surveillance maritime.

Dans le cadre de la surveillance maritime, un radar aéroporté a pour mission de détecter et pister les cibles marines présentes. Pour effectuer cette mission, le radar capte le signal rétrodiffusé par les cibles. Ce signal est ensuite analysé pour extraire des mesures radar caractérisant les positions potentielles d'objets d'intérêt sur lesquelles on applique généralement un pistage.

Actuellement sur les radars de surveillance maritime, les traitements de poursuite ne sont pas optimisés selon les données environnementales mesurées ou accessibles par le radar. Ainsi, toutes les cibles détectées sur une zone de surveillance donnée sont pistées de manière identique.

Un inconvénient majeur de cette solution est que la performance globale du pistage n'est pas la performance maximale atteignable. De plus, dans l'éventualité où les traitements de pistage peuvent être adaptés manuellement par un opérateur, les inconvénients sont notamment les suivants :
- un temps nécessaire passé par l'opérateur trop long pour identifier des zones de pistage spécifiques au réglage de l'algorithme embarqué ;
- l'opérateur doit, pour faire un choix à bon escient, avoir été formé d'une part, et disposer d'une expérience non négligeable d'autre part.

La publication EP 3 246 726 intitulée « Procédé d'optimisation de la détection de cibles marines et radar mettant en œuvre un tel procédé » divulgue un traitement de détection fonction des caractéristiques d'environnement. La publication de C. Magnant et al parue dans IEEE en 2018 sous la référence 978-1-5386-4167-5/18 et intitulée « Joint Tracking ad Classification for Extended Targets in Maritime Surveillance » divulgue un traitement de détection fonction des caractéristiques de déplacement de la cible.

Un but de l'invention est notamment de pallier les inconvénients précités. A cet effet, l'invention a pour objet un procédé de pistage de cibles par un radar aéroporté, comportant au moins :
- une étape préliminaire de mémorisation d'un ensemble d'algorithmes de pistage fonction de types de cibles et d'environnements, chaque algorithme de pistage étant fonction d'un type de cible dans un environnement donné ;
- une étape de détection de signaux rétrodiffusés par lesdites cibles conduisant à l'obtention de détections primaires ;
ladite étape de détection étant suivie, pour chaque cible détectée :
- d'une étape :
   o de caractérisation de ladite cible détectée en types de cible à partir desdites détections primaires et ;
   o d'analyse de l'environnement desdites cibles pour déterminer dans quel environnement donné se situe chaque cible détectée ;
- une étape d'adaptation du pistage à chaque cible détectée, ladite adaptation se faisant par le choix de l'algorithme de pistage en fonction du type de cible auquel ladite cible appartient et de l'environnement donné dans lequel elle se situe, chaque algorithme de pistage comporte un traitement pour les pistages courts et un traitement pour les pistages longs.

Lesdites cibles sont par exemple des cibles maritimes.

Un algorithme de pistage comporte au moins un filtrage des détections primaires et un jeu de paramètres de pistage fonction du type de cible et de l'environnement.

Ledit ensemble d'algorithmes de pistage peut évoluer au cours d'une même mission de surveillance dudit radar aéroporté.

Chaque environnement donné intègre par exemple un ou plusieurs éléments d'environnement suivants :
- le fouillis de mer ;
- l'état de la mer ;
- la direction et la force du vent ;
- le relief du terrain ;
- la situation géographique ;
- l'estimation du rapport signal sur bruit.

Chaque type de cible est par exemple caractérisé par un ou plusieurs des paramètres suivants :
- la surface équivalente radar (SER) ;
- l'étalement en distance ;
- la vitesse radiale relative.

L'invention a également pour objet un radar mettant en œuvre un tel procédé.

D'autres caractéristiques et avantages de l'invention apparaîtront à la suite de la description qui suit, faite en regard de dessins annexés qui représentent :
- les figures 1a et 1b, une illustration d'un traitement de pistage selon l'art antérieur ;
- la figure 2, une présentation d'étapes possibles mettant en œuvre le procédé selon l'invention ;
- la figure 3, une illustration générique du procédé selon l'invention ;
- la figure 4, un exemple d'application du procédé de pistage selon l'invention ;
- la figure 5, une illustration du procédé selon l'invention adapté par exemple au cas de la figure 4.

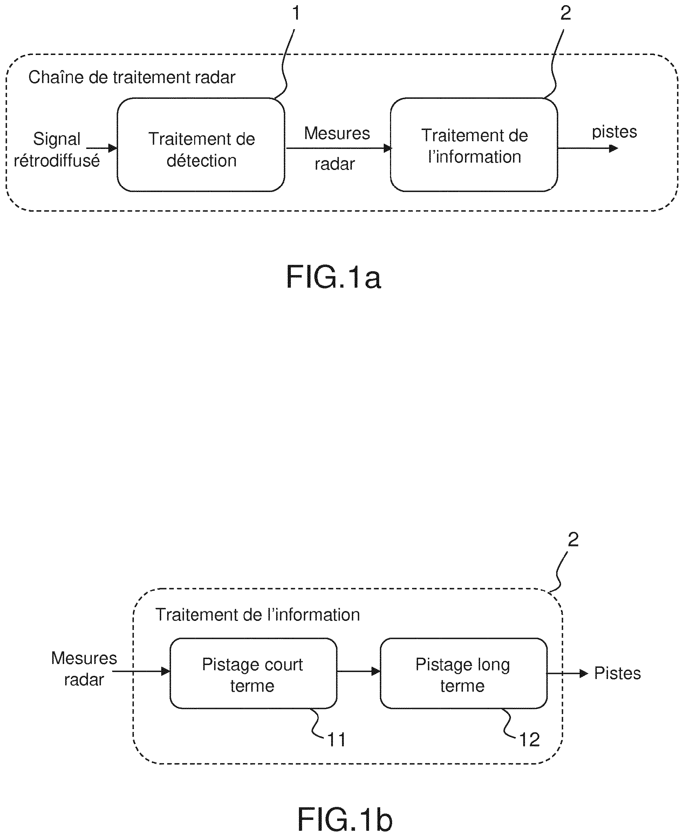

Les figures 1a et 1b illustrent le traitement de pistage classique appliqué notamment à un radar de surveillance maritime, la figure 1a illustrant plus particulièrement une chaîne de traitement selon l'art antérieur.

Dans le domaine du radar, la détection et le pistage d'une cible sont menés à partir de deux blocs 1, 2 de traitement distincts. Le premier bloc 1 a pour objectif d'extraire des détections primaires ou mesures radar, à partir d'un signal reçu rétrodiffusé par une cible. Ces mesures sont ensuite exploitées par le deuxième bloc 2 de traitement de l'information qui a pour objectif de réaliser le pistage des cibles dans une zone d'intérêt à partir des mesures fournies par le premier bloc jusqu'à l'instant courant.

Dans le contexte de la présente invention, on décrit plus particulièrement le bloc 2 de traitement de l'information présenté en figure 1b. De nombreux traitements connus de pistage de cibles admettent la même architecture quel que soit le type de cibles pistées dans une zone d'intérêt.

Dans le cas le plus complet, ce bloc de traitement de l'information comporte un traitement de pistage court terme 11 et un traitement de pistage long terme 12 :
Le pistage « court terme » est optionnel. Ce pistage court terme permet notamment d'augmenter la sensibilité du radar en abaissant le seuil de détection pour une probabilité de fausses alarmes fixée *a priori* (cible). Sans ce traitement de très nombreuses fausses alarmes seraient transmises au bloc « Pistage long terme » et se traduirait par un grand nombre de fausses détections et de fausses pistes, ce qui serait opérationnellement inacceptable. Une solution connue consiste alors à exploiter les cinématiques probables des cibles pour les différencier des fausses alarmes. Ce procédé, appelé pistage court terme, est selon sa mise en œuvre plus connu sous le nom de « Track-Before-Detect » (TBD) ou encore l'« Intégration de Tour à Tour » (ITT). Le principe est le suivant : si une succession de détections obtenues sur plusieurs cycles d'éclairement correspond à une succession de positions qui corrèlent suffisamment avec un modèle cinématique, on considère qu'il s'agit d'une cible, ou d'une fausse alarme dans le cas contraire.

Le pistage « long terme » correspond à la fonction de pistage classique d'un radar (estimation de la trajectoire des cibles poursuivies).

Dans cette décomposition donnée en exemple, les deux fonctions de pistage « court » et « long » termes sont séparées. On peut toutefois réaliser les deux fonctions (élimination des fausses alarmes de cinématiques improbables et estimation de trajectoire à long terme) dans la même structure.

Les techniques TBD et ITT consistent à effectuer le filtrage cinématique de différentes mesures qui corrèlent tour à tour (c'est-à-dire, qui représentent potentiellement la même cible au cours du temps). Ce filtrage est fondé sur différents modèles de mouvement de cibles tels que le mouvement rectiligne uniforme, le mouvement uniformément accéléré, le modèle de Singer, etc. Ces modèles permettent de prédire l'évolution des positions, vitesses et accélérations des cibles. Le principe du TBD est fondé sur l'hypothèse que les cibles réelles ont une cinématique cohérente au cours du temps alors que la plupart des fausses alarmes issues du bruit thermique et des interférences (sol, mer et atmosphère) apparaissent spatialement de façon aléatoire et sur un temps court.

Finalement, afin de réduire la probabilité de fausses alarmes, un traitement du type TBD ou ITT est souvent considéré en entrée du bloc de traitement pistage. Ces approches sont fondées sur un critère de détection du type *k*/*N* qui influe sur la rapidité d'apparition des cibles. Ainsi, afin de définir si une suite de détections correspond à une cible ou non, il s'agit d'évaluer sur un horizon glissant de *N* éclairements, si au moins *k* détections primaires corrèlent, c'est-à-dire sont cohérentes avec le modèle cinématique considéré.

Si c'est le cas, ces détections sont transmises au pistage dit long terme. Dans la description de l'invention qui suit, on se rapporte à la solution à deux étapes de la figure 1b bien que l'invention soit également applicable au cas où un seul étage de filtrage se charge des deux types de pistage.

Dans une chaîne de traitement classique comme illustrée par la figure 1a, le choix du traitement (type de filtre et paramètres associés notamment) est unique et prédéfini quels que soit les cibles et leur environnement.

Le procédé selon l'invention adapte avantageusement les traitements de pistage en temps réel, non seulement à partir des caractéristiques intrinsèques des cibles, mais de l'étude de l'environnement du radar sur tout son domaine de détection.

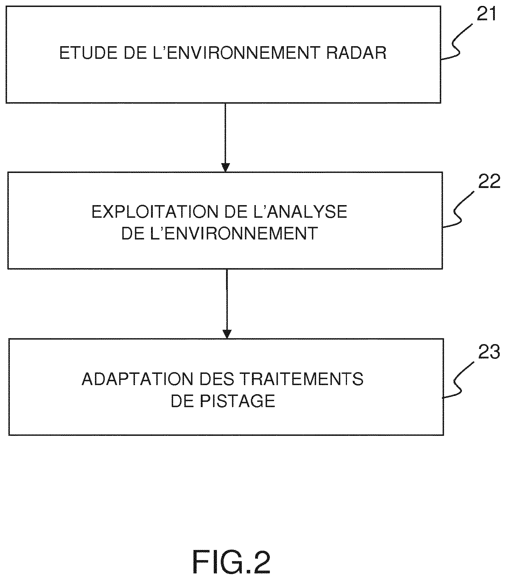

La figure 2 illustre trois étapes du procédé selon l'invention, ces trois étapes sont :
- une étape 21 d'étude de l'environnement du radar mettant en œuvre le procédé ;
- une étape 22 d'exploitation de l'analyse de l'environnement ;
- une étape 23 d'adaptation des traitements de pistage.

Comme cela sera montré dans la suite de la description, dans cette troisième étape le procédé selon l'invention tire profit en temps réel de l'analyse de l'environnement du radar sur tout son domaine de détection afin de définir de manière automatique et adaptative le traitement de pistage selon les cibles détectées et leurs environnements respectifs.

Dans la première étape 21, l'étude de l'environnement du radar est réalisée à partir des traitements radar et de sources externes au radar. Les sources externes au radar sont par exemple des fichiers MNT (modèle numérique de terrain) ou encore des recueils d'informations météorologiques.

Dans la deuxième étape 22, l'objectif de l'exploitation de l'analyse de l'environnement est de mettre à profit cette analyse pour adapter le traitement de pistage dans la troisième.

On décrit ci-dessous des exemples, non exhaustifs, d'exploitation d'analyse de l'environnement.

### Exploitation de l'analyse du clutter :

Etant donné la position de la plateforme porteuse du radar, celui-ci capte le signal rétrodiffusé par la surface de la mer en fonction de la forme d'onde émise. Les propriétés de ce signal, aussi appelé clutter de mer dépendent des paramètres connus, tels que la résolution distance, l'altitude de la plateforme ainsi que l'aire de la cellule de résolution et d'autres paramètres qui peuvent être déduits des modèles de clutter de mer de l'état de l'art tels que la direction du vent et de la houle.

Une cible se situant dans une zone de clutter à forte intensité (zone endo-clutter) aura une probabilité plus faible de se déplacer à une vitesse importante et de manœuvrer qu'une cible exo-clutter (environnement uniquement constitué de bruit thermique) sur mer calme. Il est ainsi possible d'adapter les modèles de mouvement et leurs paramètres.

### Exploitation de l'état de mer :

Le taux de fausse alarme étant généralement plus important dans les zones endo-clutter que dans les zones exo-clutter, les critères de création ou suppression de pistes peuvent être adaptés à chacune des situations.

### Exploitation de la direction et force du vent :

La probabilité de détection et le taux de fausses alarmes peuvent être corrélés aux zones dites *downwind, upwind, crosswind* (respectivement en vent arrière, face au vent et perpendiculaires au vent) et ainsi être adaptés en conséquence dans les fonctions de pistage.

### Exploitation des fichiers MNT (relief du terrain) :

Du fait de l'amélioration croissante des performances de détection des radars de surveillance, il est possible de détecter de plus en plus de cibles tout en maîtrisant le taux de fausse alarme. Plus particulièrement, il est connu que de nombreuses détections sont présentes en environnement côtier. Celles-ci ne sont pas des fausses alarmes mais correspondent à des détections de faible surface équivalent radar (SER) tels que des petits bateaux de pêche, des bouées, des parcs à huitres, etc. Cette sensibilité du radar, notamment en proximité des zones côtières, nouvelle vis-à-vis des radars existants, a pour conséquence d'offrir une situation tactique qui peut être difficile à traiter. Ainsi, on peut exploiter les modèles numériques de terrain (MNT) afin non seulement de distinguer les zones terrestres des zones maritimes mais aussi afin d'identifier les zones côtières sur le globe terrestre. Les traitements de pistage pour les cibles en pleine mer et les cibles proches des côtes peuvent alors être différenciés.

### Exploitation des cartes routières / aériennes / maritimes (situation géographique des cibles) :

Le comportement des cibles sont parfois prédictibles plus aisément car celles-ci évoluent sur des surfaces/routes contraintes. Concernant le transport maritime, certains bateaux suivent des routes prédéfinies. Il est alors possible d'intégrer ces informations *a priori* dans les modèles d'évolution des cibles.

### Exploitation de l'estimation du rapport Signal-à-Bruit :

La probabilité de détection d'une cible peut être facilement corrélée au rapport signal à bruit (RSB) voire au rapport clutter à bruit (RCB). Egalement, la probabilité a priori qu'une détection corresponde à une cible ou une fausse alarme peut être corrélée au RSB/RCB. Ainsi, il est possible d'adapter la modélisation de ces probabilités dans les fonctions de pistage.

Les caractéristiques intrinsèques de cibles peuvent également être exploitées pour adapter les critères de détection, pour améliorer notamment la capacité à détecter plus rapidement. On peut en particulier considérer les exploitations suivantes :

### Exploitation de la mesure de SER :

La SER d'une cible peut être considérée comme un indicateur de manœuvrabilité de la cible. En effet, on peut supposer que plus une cible a une faible SER plus ses capacités à manœuvrer sont importantes. Il est ainsi possible d'adapter les modèles de mouvement et leurs paramètres.

### Exploitation de l'étalement distance de la cible :

La taille d'une cible peut être considérée comme un indicateur de manœuvrabilité de la cible. En effet, on peut supposer que plus une cible est petite plus ses capacités à manœuvrer sont importantes. Il est ainsi possible d'adapter les modèles de mouvement et leurs paramètres.

### Exploitation de la vitesse radiale relative :

La vitesse d'une cible et son taux de variation peuvent donner une indication sur la capacité d'une cible à manœuvrer mais également sur le temps de rafraîchissement maximal pour ne pas décrocher la piste. Il est ainsi possible d'adapter les modèles de mouvement et leurs paramètres ainsi que la période d'éclairement de la cible (en particulier avec des radars à balayage électronique).

Dans la troisième étape 23, l'adaptabilité des traitements de pistage est par exemple faite sur les différents niveaux suivants :
- la modélisation du taux de fausses alarmes et de la probabilité de détection ;
- le choix de l'algorithme de pistage court terme (TBD, ITT, ou autre) et des paramètres associés ;
- le choix de l'algorithme de pistage long terme et des paramètres associés ;
- le choix du ou des modèles dynamiques caractérisant l'évolution des cibles (mouvement rectiligne uniforme, mouvement de Singer, mouvement uniformément accéléré par exemple) ;
- le choix des paramètres associés à ces modèles (variance sur les bruits de modèle et de mesure, taille des fenêtres de corrélation minimale et maximale par exemple) ;
- la modélisation de la statistique des bruits de modèles et de mesure.

Comme le montrera la suite de la description, pour mettre en œuvre cette étape 23 on réalise dans une étape préliminaire différentes chaînes de traitement de pistage (ou algorithmes de pistage) où chaque chaîne est adaptée à un type de cible et à un environnement. Dans cette troisième étape 23, le choix de l'algorithme de pistage dépend des types de cibles et des environnements qui ont été caractérisés dans les étapes précédentes.

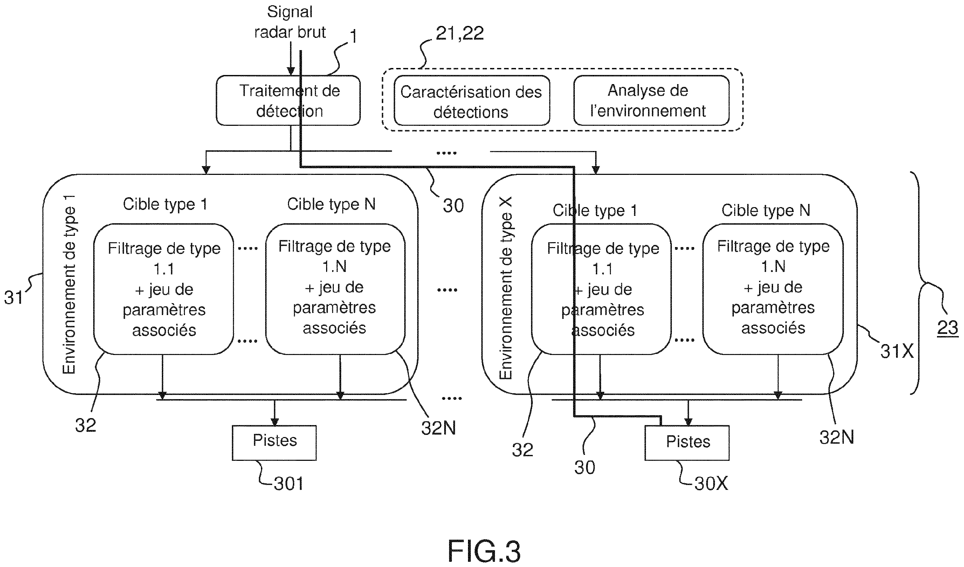

La figure 3 précise la structure des étapes du procédé selon l'invention décrite précédemment.

En relation avec la figure 1a, le procédé de pistage selon l'invention comporte toujours l'étape 1 de traitement de détection, avec en entrée le signal radar brut rétrodiffusé par une cible.

Les étapes 21, 22 d'étude de l'environnement et d'exploitation de l'analyse de l'environnement décrites précédemment permettent de choisir dans l'étape suivante 23 le traitement de pistage adapté à chaque cible.

Dans l'analyse de l'environnement 22, le radar effectue une caractérisation des cibles, à partir des signaux détectés 1 plus particulièrement à partir des détections primaires obtenues dans l'étape 1 de traitement des détections. Cette caractérisation est notamment définie par la SER, la longueur (étalement) et la vitesse des cibles. Les autres paramètres d'environnement sont également analysés comme cela a été décrit pour des exemples de paramètres dans les étapes 21, 22 ci-dessus. Toutes ces analyses sont effectuées par les moyens de traitement du radar.

Dans une étape préliminaire, en fonction de la mission de surveillance on retient X types d'environnement 31, 31X possibles, conformément aux types d'environnement exploités décrits précédemment. De même, on définit N types de cibles pour l'ensemble des environnements. On obtient ainsi N types de cibles par environnement où chaque type de cible a un traitement de pistage associé 32, 32N. Chaque traitement de pistage est caractérisé par un filtrage et un jeu de paramètres de pistages associés. Pour chaque type de cible le traitement de filtrage est adapté à l'environnement. Ainsi, le filtrage de type 1.1 du traitement de pistage de la cible de type 1 dans l'environnement de type 1 peut être différent du filtrage de type X.1 pour cette même cible de type 1 dans l'environnement de type X. De même le filtrage de type 1.N de la cible de type N dans l'environnement de type 1 peut être différent du filtrage de type X.N dans l'environnement de type X.

Pour chaque type d'environnement retenu, on retient ainsi tous les types de cibles analysés avec leurs traitements de pistage associés. Pour chaque type de cible, on prévoit un trajet fonction de l'environnement. A titre d'exemple, on illustre sur la figure 3, une chaîne de traitement 30 pour une cible de type 1 dans l'environnement de type X, conduisant à l'obtention de pistes 30X.

Les moyens de traitement radar comportent donc en mémoire un ensemble d'algorithmes de pistage regroupés selon les types de cibles et les types d'environnement. La structure algorithmique du traitement de pistage selon l'invention permet donc de sélectionner automatiquement un pistage spécifique adapté à chaque situation (type de cible dans un type d'environnement). Pour chaque cible détectée, le choix de l'algorithme de pistage est fonction du type de cible auquel appartient ladite cible et de l'environnement dans lequel elle se situe. Le choix est effectué automatiquement par les moyens de traitement, sans intervention d'un opérateur extérieur. On obtient ainsi un traitement auto-adaptatif.

Les types de cibles et les types d'environnement retenus peuvent évoluer au cours du temps, notamment en ce qui concerne leurs nombres. En d'autres termes, les algorithmes de pistage mémorisés ou présélectionnés, peuvent varier au cours du temps. Ils peuvent par exemple varier en fonction de l'évolution de la mission du radar de surveillance.

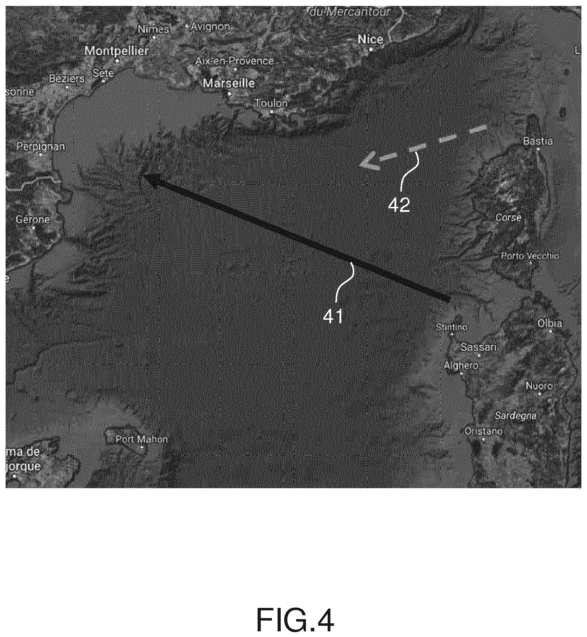

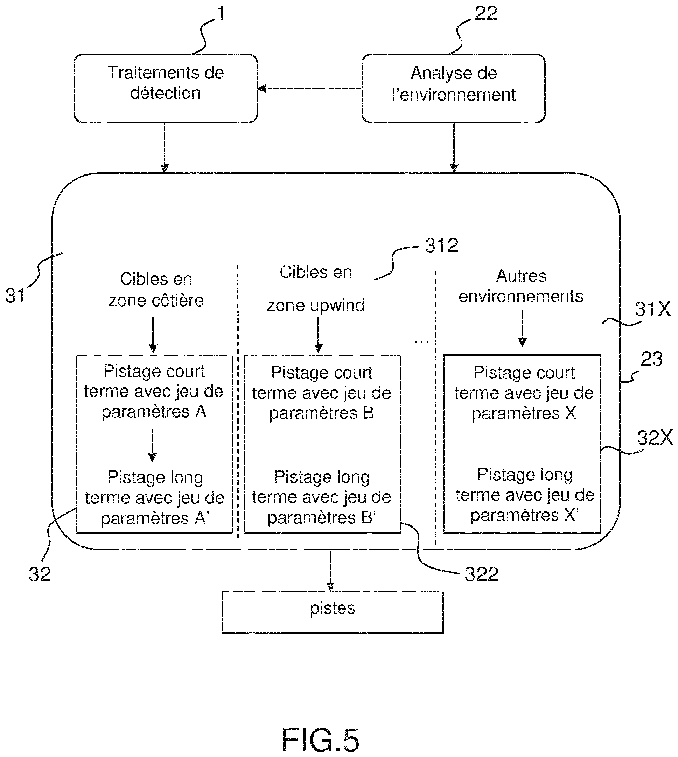

La figure 4 illustre un exemple d'application de l'invention. La figure 5 qui sera décrite par la suite illustre un exemple de mise en œuvre du procédé selon l'invention adapté au cas d'application de la figure 4.

Sur la figure 4, le porteur du radar vole au-dessus de la mer Méditerranée, selon une trajectoire 41, la direction du vent 42 coupant cette trajectoire. Dans cet exemple, l'analyse de l'environnement permet d'extraire les informations suivantes :
- état de la mer : force 3 ;
- direction du vent : 250° ;
- détection et identification des zones côtières.

Les traitements de pistage sont adaptés à partir de l'analyse de l'environnement comme l'illustre la figure 5 et les tableaux ci-dessous. Pour les traitements de pistage, on distingue les pistages de type court terme et les pistages de type long terme.

La structure de l'algorithme de pistage illustré par la figure 5 est un cas particulier de la structure générale illustrée par la figure 3, plus précisément en ce qui concerne l'étape 23 d'adaptation des pistages.

Un premier type d'environnement 31 décrit les cibles en zone côtière. Un deuxième type d'environnement 312 décrit les cibles face au vent. D'autres environnements 31X sont pris en compte, par exemple l'état de la mer. Dans l'exemple de la figure 5, il y a un seul type de filtrage par environnement, un filtrage pour le pistage court terme et un filtrage pour le pistage long terme. Les jeux de paramètres associés aux filtrages sont détaillés, à titre d'exemple, dans les tableaux 1 et 2 ci-dessous.

Le tableau 1 décrit les paramètres des pistages court terme. Les paramètres retenus sont le critère de détection k/N, le modèle de mouvement de la cible, l'écart type sur l'accélération de la cible et l'écart type sur le bruit de mesure. Le tableau 2 décrit les pistages long terme. Les paramètres retenus sont le modèle de mouvement, l'écart type sur l'accélération et l'écart type sur le bruit de mesure.

Chaque ligne indique le type de filtrage et les valeurs des paramètres associés à un environnement. En regard de la figure 5, les jeux de paramètres A, A', de paramètres B, B' et X, X' correspondent respectivement aux cibles en zone côtière, aux cibles en zone « upwind », et aux autres environnements. La deuxième colonne des tableaux indique le type de filtrage utilisé en association avec ces paramètres. Ainsi en zone côtière, pour le pistage court, on utilise un filtre de Kalman en considérant un mouvement rectiligne uniforme, un écart-type sur l'accélération de 0,02 g et un écart-type sur le bruit de mesure de *σ_{d}* = 10m et *σ_{az}* = 5*mrad* (1^{ère} ligne du tableau 1, jeux de paramètres A). Dans les autres environnements, pour un pistage long, on utilise un filtre de Kalman, en considérant un modèle de Singer, un écart-type sur l'accélération de 0,2 g et un écart-type sur le bruit de mesure de *σ_{d}* = 15m et *σ*_{az} *= 7mrad* (3^{ème} ligne du tableau 2, jeux de paramètres X').

**Tableau 1**

| Jeux de paramètres | *k*/*N* | Type de filtrage | Modèle de mouvement | Ecart-type sur l'accélération | Ecart-type sur le bruit de mesure |
|---|---|---|---|---|---|
| A | 4/7 | Kalman | Rectiligne Uniforme | 0.02*g* | *σ_{d}* = 10*m* ; |
| | | | | | *σ_{az}* = 5*mrad* |
| B | 4/6 | Kalman | Rectiligne Uniforme | 0.01*g* | *σ_{d}* = 15*m* ; |
| | | | | | σ*_{az} = 7mrad* |
| X | 3/6 | Kalman | Rectiligne Uniforme | 0.1*g* | *σ_{d}* = 15*m* ; |
| | | | | | σ*_{az} = 7mrad* |

**Tableau 2**

| Jeux de paramètres | Type de filtrage | Modèle de mouvement | Ecart-type sur l'accélération | Ecart-type sur le bruit de mesure |
|---|---|---|---|---|
| A' | CMKF | Rectiligne Uniforme | 0.05*g* | *σ_{d} =* 10*m* ; |
| | | | | *σ_{az}* = 5*mrad* |
| B' | Filtre particulaire | Rectiligne Uniforme | 0.02*g* | *σ_{d} =* 15*m* ; |
| | | | | *σ_{az}* = *7mrad* |
| X' | Kalman | Modèle de Singer | 0.2 *g* | *σ_{d} =* 15*m* ; |
| | | | | *σ_{az} = 7mrad* |

Dans le cadre de la surveillance maritime illustré par la figure 4, et comme pour toute surveillance maritime, le radar aéroporté a pour mission de détecter et pister les cibles marines présentes. Pour effectuer cette mission, le radar capte les signaux rétrodiffusés par les cibles, ces signaux sont ensuite analysés pour extraire des mesures radar caractérisant les positions potentielles d'objets d'intérêt sur lesquelles on applique le procédé de pistage selon l'invention.

Le signal capté par le radar est également composé d'un signal perturbateur rétrodiffusé par la mer (fouillis ou « clutter » de mer). La position et l'intensité de la zone de clutter sont notamment variables selon l'état de la mer et la présentation par rapport au vent. Avantageusement, l'invention permet de différencier le pistage selon les caractéristiques environnementales des détections associées à une cible (cible dans un secteur *downwind* VS cible dans un secteur *upwind,* présence de fort clutter ou uniquement de bruit thermique dans l'environnement de la cible, proximité aux zones côtières, etc.). Les différentes chaînes de traitement du procédé illustré par la figure 5 permettent d'adapter le pistage au cas d'application de la figure 4. Avantageusement, l'invention dote le radar d'une capacité à optimiser lui-même et automatiquement les traitements de pistage grâce à la connaissance de son environnement et en fonction du besoin opérationnel. L'étude de l'environnement peut provenir de plusieurs sources, notamment :
- De sources externes au radar : par exemple l'exploitation de fichiers numériques de terrain, le recueil d'informations météo, etc. ;
- Du radar grâce à une analyse adéquate des signaux radar reçus. Cette analyse de l'environnement vise également à déduire des informations similaires à celles du point précédent, mais fournit une analyse plus fine, notamment en ce qui concerne la caractérisation du fouillis rencontré.

Cette étude de l'environnement fournit par exemple des informations sur :
- les caractéristiques du clutter de mer par analyse algorithmique de la puissance du signal rétrodiffusé ou réception de données météo ;
- la direction 42 du vent, celle-ci pouvant être déterminée soit par acquisition d'une information venant de l'extérieur soit automatiquement lors de l'analyse de l'environnement en estimant la direction où la puissance du signal rétrodiffusé par la mer est la plus forte ;
- la proximité ou non de la zone côtière.

A partir de cette analyse, le radar piste chaque cible détectée en utilisant un algorithme de pistage (chaîne de traitement 30) adapté à l'environnement concerné. L'adaptation de la solution algorithmique retenue pour effectuer la fonction de pistage se situe d'une part dans l'algorithme lui-même (ITT, TBD, filtrage de Kalman, filtrage particulaire, filtrage mono-cible ou multi-cibles, etc.) et d'autre part dans le réglage des paramètres de l'algorithme retenu.

Les avantages de l'invention sont notamment les suivants :
- optimisation des capacités du radar ;
- optimisation des performances du pistage en l'adaptant à chaque cible ;
- réduction de la charge de travail de l'opérateur ;
- réduction du temps de formation des opérationnels.

Plus généralement, l'invention permet avantageusement :
- d'améliorer les performances de pistage en choisissant l'algorithme de pistage le plus approprié pour chacune des cibles pistées ;
- de diminuer la charge de travail des opérateurs radar en automatisant tous les traitements et en les adaptant de manière optimale, en pratique un opérateur pour la surveillance maritime n'est plus obligé de sélectionner a priori des zones de surveillance adaptées à seulement certains types de cibles.

## Revendications

1. Procédé de pistage de cibles par un radar aéroporté, **caractérisé en ce qu'**il comporte au moins :
- une étape préliminaire de mémorisation d'un ensemble d'algorithmes de pistage fonction de types de cibles et d'environnements, chaque algorithme de pistage étant fonction d'un type de cible dans un environnement donné ;
- une étape (1) de détection de signaux rétrodiffusés par lesdites cibles conduisant à l'obtention de détections primaires, lesdits algorithmes de pistage comporte au moins un filtrage desdites détections primaires et un jeu de paramètres de pistage (32, 32N) fonction du type de cible et de l'environnement (31, 31X) ;
ladite étape de détection étant suivie, pour chaque cible détectée :
- d'une étape (21, 22) :
o de caractérisation de ladite cible détectée en types de cible à partir desdites détections primaires et ;
o d'analyse de l'environnement desdites cibles pour déterminer dans quel environnement donné se situe chaque cible détectée ;
- une étape (23) d'adaptation du pistage à chaque cible détectée, ladite adaptation se faisant par le choix de l'algorithme de pistage (30) en fonction du type de cible auquel ladite cible appartient et de l'environnement donné dans lequel elle se situe, chaque algorithme de pistage comportant un traitement pour les pistages courts dits « Track Before Detect » et un traitement pour les pistages longs.

2. Procédé selon la revendication 1, **caractérisé en ce que** lesdites cibles sont des cibles maritimes.

3. Procédé selon l'une quelconque des revendications précédentes, **caractérisé en ce que** ledit ensemble d'algorithmes de pistage évolue au cours d'une même mission de surveillance dudit radar aéroporté.

4. Procédé selon l'une quelconque des revendications précédentes, **caractérisé en ce que** chaque environnement donné intègre un ou plusieurs éléments d'environnement suivants :
- le fouillis de mer ;
- l'état de la mer ;
- la direction et la force du vent ;
- le relief du terrain ;
- la situation géographique ;
- l'estimation du rapport signal sur bruit.

5. Procédé selon l'une quelconque des revendications précédentes, **caractérisé en ce que** chaque type de cible est **caractérisé par** un ou plusieurs des paramètres suivants :
- la surface équivalente radar (SER) ;
- l'étalement en distance ;
- la vitesse radiale relative.

6. Radar, **caractérisé en ce qu'**il est apte à mettre en œuvre le procédé selon l'une quelconque des revendications précédentes.

## Patentansprüche

1. Verfahren zum Verfolgen von Zielen durch ein luftgestütztes Radar, **dadurch gekennzeichnet, dass** es mindestens Folgendes umfasst:
- einen vorbereitenden Schritt des Speicherns eines Satzes von Verfolgungsalgorithmen in Abhängigkeit von Ziel- und Umgebungstypen, wobei jeder Verfolgungsalgorithmus von einem Zieltyp in einer gegebenen Umgebung abhängig ist;
- einen Schritt (1) des Erfassens von Signalen, die von den Zielen zurückgestreut werden, was zur Erzielung von Primärerfassungen führt, wobei die Verfolgungsalgorithmen mindestens eine Filterung der Primärerfassungen und einen Satz von Verfolgungsparametern (32, 32N) umfassen, die vom Ziel- und Umgebungstyp (31, 31X) abhängig sind;
wobei der Erfassungsschritt für jedes erfasste Ziel gefolgt wird:
- von einem Schritt (21, 22):
o des Charakterisierens des erfassten Ziels in Zieltypen auf der Basis der Primärerfassungen, und
o des Analysierens der Umgebung der Ziele, um zu bestimmen, in welcher gegebenen Umgebung sich jedes erfasste Ziel befindet;
- einem Schritt (23) des Anpassens der Verfolgung an jedes erfasste Ziel, wobei die Anpassung durch die Wahl des Verfolgungsalgorithmus (30) in Abhängigkeit von dem Zieltyp, zu dem das Ziel gehört, und der gegebenen Umgebung, in der es sich befindet, erfolgt, wobei jeder Verfolgungsalgorithmus eine Verarbeitung für kurze Verfolgungen, "Track Before Detect" genannt, und eine Verarbeitung für lange Verfolgungen umfasst.

2. Verfahren nach Anspruch 1, **dadurch gekennzeichnet, dass** die Ziele Seeziele sind.

3. Verfahren nach einem der vorhergehenden Ansprüche, **dadurch gekennzeichnet, dass** sich der Satz von Verfolgungsalgorithmen im Laufe einer selben Überwachungsmission des Flugzeugradars ändert.

4. Verfahren nach einem der vorhergehenden Ansprüche, **dadurch gekennzeichnet, dass** jede gegebene Umgebung eines oder mehrere der folgenden Umgebungselemente enthält:
- das Meeresgewirr;
- den Zustand des Meeres;
- die Richtung und die Stärke des Windes;
- das Relief des Geländes;
- die geographische Lage;
- die Schätzung des Signal-Rausch-Verhältnisses.

5. Verfahren nach einem der vorhergehenden Ansprüche, **dadurch gekennzeichnet, dass** jeder Zieltyp durch einen oder mehrere der folgenden Parameter gekennzeichnet wird:
- die Rückstrahlfläche (SER);
- die Ausbreitung in der Distanz;
- die relative Radialgeschwindigkeit.

6. Radar, **dadurch gekennzeichnet, dass** es das Verfahren nach einem der vorhergehenden Ansprüche durchführen kann.

## Claims

1. A method for tracking targets using an airborne radar, **characterised in that** it comprises at least:
- a preliminary step of storing a set of tracking algorithms as a function of types of targets and of environments, each tracking algorithm being a function of a type of target in a given environment;
- a step (1) of detecting signals backscattered by said targets resulting in primary detections being obtained, said tracking algorithms comprising at least one filtering of said primary detections and a set of tracking parameters (32, 32N) as a function of the type of target and of the environment (31, 31X);
said detection step being followed, for each detected target:
- by a step (21, 22):
o of characterizing said detected target into types of target on the basis of said primary detections; and
o of analysing the environment of said targets to determine in which given environment each detected target is located;
- a step (23) of adapting the tracking to each detected target, said adapting being completed by selecting the tracking algorithm (30) as a function of the type of target to which said target belongs and of the given environment in which it is located, each tracking algorithm comprising a processing for the short so-called "Track Before Detect" tracks and a processing for the long tracks.

2. The method according to claim 1, **characterised in that** said targets are maritime targets.

3. The method according to any of the preceding claims, **characterised in that** said set of tracking algorithms changes during the same surveillance mission of said airborne radar.

4. The method according to any of the preceding claims, **characterised in that** each given environment integrates one or more of the following environment elements:
- the sea clutter;
- the sea state;
- the direction and the force of the wind;
- the topography;
- the geographical location;
- the estimation of the signal-to-noise ratio.

5. The method according to any of the preceding claims, **characterised in that** each type of target is **characterised by** one or more of the following parameters:
- the radar cross section (RCS);
- the distance spread;
- the relative radial speed.

6. A radar, **characterised in that** it is able to implement the method according to any of the preceding claims.
